# EUROPÄISCHE PATENTSCHRIFT

(11) **EP 4 605 284 B1**
(45) Veröffentlichungstag und Bekanntmachung des Hinweises auf die Patenterteilung: **09.12.2026**
(21) Anmeldenummer: 23789955.4
(22) Anmeldetag: 12.10.2023
(51) Int. Cl.: B60T 13/66

(54) **BREMSSYSTEM FÜR EIN FAHRZEUG UND VERFAHREN ZUM BETREIBEN EINES BREMSSYSTEMS**
BRAKE SYSTEM FOR A VEHICLE AND METHOD FOR OPERATING A BRAKE SYSTEM
SYSTÈME DE FREINAGE POUR UN VÉHICULE ET PROCÉDÉ DE FONCTIONNEMENT D'UN SYSTÈME DE FREINAGE

(30) Priorität: 20.10.2022 DE 102022211139
(43) Veröffentlichungstag der Anmeldung: 27.08.2025
(73) Patentinhaber: Robert Bosch GmbH, 70442 Stuttgart (DE)
(72) Erfinder: NAGAKURA, Yasutaka, 70469 Stuttgart (DE)
(86) Internationale Anmeldenummer: PCT/EP2023/078388
(87) Internationale Veröffentlichungsnummer: WO 2024/083641

(56) Entgegenhaltungen:
- DE-A1- 102010 038 548
- US-A1- 2012 161 505
- US-A1- 2014 152 082
- US-A1- 2014 319 902
- US-A1- 2015 307 072

## Beschreibung

### Technisches Gebiet

Die vorliegende Erfindung betrifft ein Bremssystem für ein Fahrzeug und Verfahren zum Betreiben eines Bremssystems.

### Stand der Technik

In ganz oder teilweise elektrisch angetriebenen Fahrzeugen wird eine elektrische Maschine üblicherweise auch zum Bremsen des Fahrzeugs verwendet, indem sie als Generator betrieben wird. Die so erzeugte elektrische Energie wird typischerweise in eine Fahrzeugbatterie eingespeist. Dieser Vorgang wird auch als regeneratorische oder regenerative Bremsung bezeichnet.

Üblicherweise wird das regenerative Bremsen für Verzögerungen von bis zu 0,3 G eingesetzt. Für stärkere Verzögerungen kommt in der Regel ein hydraulisches Bremssystem zum Einsatz, bei denen Radbremsen durch ein Hydraulik- oder Bremsfluid mit einem Bremsdruck beaufschlagt werden. Hierbei haben sich Systeme mit Bremskraftverstärkern bewährt, wobei ein von einem Fahrer oder einer Fahrerin an einer Bremsbetätigungseinrichtung, wie einem Bremspedal, erzeugte Kraft mittels eines pneumatischen oder elektromechanischen Aktuators verstärkt wird. Insbesondere bei elektromechanischen Aktuatoren besteht die Möglichkeit, einen hydraulischen Bremsdruck auch unabhängig von der Betätigung der Bremsbetätigungseinrichtung zu erzeugen, wobei üblicherweise gewünscht wird, dass dies an der Bremsbetätigungseinrichtung nicht spürbar ist.

Wenn die Bremsbetätigungseinrichtung für eine moderate Verzögerung betätigt wird, die ausschließlich mithilfe der elektrischen Maschine erzeugbar ist, führt dies auch zu einer Betätigung des Aktuators und somit zu einer Verschiebung von Bremsfluid in die Radbremsen. Dies führt zur Erzeugung eines Bremsmoments, welches die über die regenerative Bremsung rückgewinnbare Energie verringert. Daher wird das Bremsfluid in solchen Fällen üblicherweise in einen über ein Auslassventil mit der Radbremse verbundenen Druckspeicher geleitet. Da der Druckspeicher als elastische Feder auf das Bremsfluid wirkt, kann das Bremsmoment an der Radbremse reduziert, aber nicht vollständig beseitig werden.

Vor diesem Hintergrund offenbart die DE 10 2014 205 645 A1 ein Verfahren zur Verringerung des Restbremsmoments an der Radbremse, wobei nach dem Verschieben des Bremsfluids in den Druckspeicher das Auslassventil geschlossen und durch eine Betätigung des elektromechanischen Aktuators der Hauptbremszylinder zum Druckabbau Fluid von Radbremse zurück in den Hauptbremszylinder gesaugt wird. Die Offenlegung US 2014/0319902 A1 befasst sich mit einem Verfahren zum Betreiben eines Bremssystems welches einen Hauptbremszylindersowie einen elektromechanischen Bremskraftverstärker umfasst.

### Offenbarung der Erfindung

Erfindungsgemäß ist ein Verfahren zum Betreiben eines Bremssystems eines Fahrzeugs mit den Merkmalen des Anspruchs 1 und ein Bremssystem für ein Fahrzeug mit den Merkmalen des Anspruchs 7 vorgesehen.

Nach einem ersten Aspekt der Erfindung umfasst ein Verfahren zum Betreiben eines Bremssystems eines Fahrzeugs ein Erfassen eines Hubs einer Bremsbetätigungseinrichtung, z.B. mittels eines Sensors, ein Erzeugen eines Bremswunschsignals, welches ein Soll-Bremsmoment repräsentiert, basierend auf dem erfassten Hub der Bremsbetätigungseinrichtung oder basierend auf einem externen Bremsbetätigungssignal und ein Erzeugen eines dem Soll-Bremsmoment entsprechenden Bremsmoments basierend auf dem Bremswunschsignal ausschließlich durch Betreiben einer elektrischen Maschine als Generator, insbesondere, wenn das Bremswunschsignal eine vorbestimmte Bedingung erfüllt wie z.B. eine Verzögerung repräsentiert, die kleiner 0,3 G ist. Weiterhin erfolgt ein Ermitteln einer Änderung des Hub der Bremsbetätigungseinrichtung, insbesondere basierend auf dem erfassten Hub, und, in Antwort auf einen abnehmenden Hub der Bremsbetätigungseinrichtung, ein Durchführen eines Druckaufbau-Vermeidungsprozesses an zumindest einer Radbremse eines Bremskreises, welche über eine Zufuhrleitung mit einem basierend auf dem Bremswunschsignal durch einen Aktuator betätigbaren Hauptbremszylinder und über eine Abfuhrleitung mit einem Druckspeicher verbunden ist.

Der Druckaufbau-Vermeidungsprozess umfasst ein Schließen eines in der Abfuhrleitung zwischen der Radbremse und dem Druckspeicher angeordneten Auslassventil oder, wenn sich das Auslassventil im geschlossenen Zustand befindet, geschlossen Halten des Auslassventils, ein Öffnen eines Hochdruckschaltventils, welches in einer den Druckspeicher mit der hydraulischen Druckerzeugungseinrichtung verbindenden Rückführungsleitung angeordnet ist, und ein Rückführen von Hydraulikfluid aus dem Druckspeicher durch die Rückführungsleitung in den Hauptbremszylinder, wobei der Aktuator den Hauptbremszylinder basierend auf dem Bremswunschsignal infolge des abnehmenden Hubs der Bremsbetätigungseinrichtung derart betätigt, dass der Druck im Hauptbremszylinder reduziert wird.

Nach einem zweiten Aspekt der Erfindung umfasst ein Bremssystem für ein Fahrzeug, eine Bremsbetätigungseinrichtung, welche dazu ausgebildet ist, infolge manueller Betätigung einen Hub auszuführen, einen Sensor zum Erfassen des Hubs der Bremsbetätigungseinrichtung, einen kinematisch an die Bremsbetätigungseinrichtung gekoppelten Bremskraftverstärker mit einem Aktuator und einem durch den Aktuator betätigbaren Hauptbremszylinder, zumindest einen Bremskreis mit zumindest einer Radbremse, welche über eine Zufuhrleitung mit dem Hauptbremszylinder verbunden ist, einen Druckspeicher, welcher über eine Abfuhrleitung mit der Radbremse und über eine Rückführungsleitung mit dem Hauptbremszylinder verbunden ist, ein in der Abfuhrleitung angeordnetes Auslassventil, ein in der Rückführungsleitung angeordnetes Hochdruckschaltventil und eine Steuerungseinrichtung, welche mit der Sensoreinrichtung, dem Aktuator, dem Auslassventil und dem Hochdruckschaltventil signalleitend verbunden ist und eine Schnittstelle aufweist, die zum Senden von Signalen an eine elektrische Maschine und/oder zum Empfangen von Signalen von der elektrischen Maschine eingerichtet ist, wobei die elektrische Maschine zum Erzeugen eines Bremsmoments als Generator betreibbar ist, und wobei die Steuerungseinrichtung dazu eingerichtet ist, das Bremssystem zur Ausführung eines Verfahrens nach einem der voranstehenden Ansprüche zu veranlassen.

Eine der Erfindung zugrundeliegende Idee besteht darin, während einer rein regenerativen Bremsung mittels elektrischer Maschine einen reduzierten Bremsdruck an der Radbremse auch bei einer Verringerung des Hubs der Bremsbetätigungsvorrichtung bzw. einer Rückwärtsbetätigung des Aktuators aufrecht zu erhalten, indem das Auslassventil geschlossen wird oder geschlossen gehalten wird und das Bremsfluid nicht über die Zufuhrleitung und somit mit einem direkt mit der Radbremse verbundenen Pfad, sondern über eine Rückführungsleitung, die den Druckspeicher mit dem Hauptbremszylinder verbindet. Hierzu wird das in der Rückführungsleitung angeordnete Hochdruckschaltventil geöffnet.

Ein Vorteil dieser Vorgehensweise liegt darin, dass das Bremsfluid aus dem Druckspeicher zurückgeführt werden kann, ohne das Auslassventil öffnen zu müssen. Dadurch kann Bremsfluid aus dem Bremskreis in den Hauptbremszylinder gesaugt werden, ohne dass dies zu einer Aktuierung der Radbremse und damit zur Erzeugung eines Restbremsmoments während der regenerativen Bremsung führt. Ein weiterer Vorteil liegt darin, dass der Pfad über das Hochdruckschaltventil stets bei Rücknahme des Hubs verfügbar ist und ein Bremsdruckaufbau auch bei nicht elektrisch betätigten Aktuatoren, z.B. bei pneumatischen oder Vakuumaktuatoren verhindert wird.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß manchen Ausführungsformen kann vorgesehen sein, dass der Aktuator ein elektro-mechanischer Aktuator ist, welcher dazu ausgebildet ist, den Hauptbremszylinder bei konstantem Hub der Bremsbetätigungseinrichtung basierend auf einem übergeordneten Steuersignal zum Druckaufbau oder Druckabbau zu betätigen, wobei das Verfahren zusätzlich in Antwort auf einen konstanten Hub der Bremsbetätigungseinrichtung zusätzlich ein Schließen des Auslassventils, ein Schließen oder geschlossen Halten des Hochdruckschaltventils und ein Reduzieren des Bremsdrucks in der Radbremse durch Betätigen des Hauptbremszylinders zum Druckabbau mittels des Aktuators basierend auf dem übergeordneten Steuersignal umfasst. Diese Sequenz ist dem oben genannten Druckaufbau-Vermeidungsprozess vorgelagert und reduziert vorteilhaft das Restbremsmoment der hydraulischen Radbremse.

Gemäß manchen Ausführungsformen kann vorgesehen sein, dass der Aktuator dazu ausgebildet ist, den Hauptbremszylinder bei konstantem Hub der Bremsbetätigungseinrichtung basierend auf dem externen Bremsbetätigungssignal zum Druckaufbau oder Druckabbau zu betätigen. Das externe Bremsbetätigungssignal kann z.B. durch einen Abstandssensor, welcher einen Abstand des Fahrzeugs zu sich in der Umgebung des Fahrzeugs befindlichen Objekten misst, oder dergleichen erzeugt werden und wird in das Bremswunschsignal umgerechnet oder umgewandelt. Dies entspricht somit einem autonomen Bremsen. Der Aktuator wird hierbei entsprechend zum Druckauf- oder -abbau im Hauptbremszylinder betätigt. Dies bringt den Vorteil mit sich, dass sich an der Bremsbetätigungsvorrichtung für den Fahrer oder die Fahrerin stets eine vordefinierte Charakteristik zwischen Hub, Betätigungskraft und Verzögerung des Fahrzeugs einstellt, z.B. wenn während des autonomen Bremsens eine Betätigung des Pedals erfolgt. Während des autonomen Bremsens kann während konstantem externen Bremsbetätigungssignal, also konstanter Stellung des Hauptbremszylinders, entsprechend dem o.g. Vorgehen bei konstantem Hub vorgegangen werden. In Antwort auf ein abnehmendes externes Bremsbetätigungssignal kann analog zu dem Vorgehen in Antwort auf abnehmendem Hub verfahren werden.

Gemäß manchen Ausführungsformen kann vorgesehen sein, dass das Verfahren in Antwort auf einen zunehmenden Hub der Bremsbetätigungseinrichtung ein Betätigen des Hauptbremszylinders zum Druckaufbau mittels des Aktuators basierend auf dem Bremswunschsigna, ein Schließen oder geschlossen Halten des Hochdruckschaltventils und ein Öffnen des Auslassventils, um Hydraulikfluid in den Druckspeicher umzuleiten umfasst. In gleicher Weise kann in Antwort auf ein zunehmendes externes Bremsbetätigungssignal verfahren werden. Somit wird vorteilhaft ein Restbremsmoment während der Einleitung der Bremsung oder während einer Vergrößerung der Verzögerung auf den Rückstelldruck des Druckspeichers reduziert.

Gemäß manchen Ausführungsformen kann vorgesehen sein, dass in der Rückführungsleitung zwischen dem Druckspeicher und dem Hochdruckschaltventil ein Rückschlagventil angeordnet ist, welches beim Rückführen des Hydraulikfluid aus dem Druckspeicher durch die Rückführungsleitung in den Hauptbremszylinder öffnet, sobald infolge des Druckabbaus im Hauptbremszylinder eine Druckdifferenz über das Rückschlagventil einen vorbestimmten Schwellwert überschreitet. Der der vorbestimmte Schwellwert kann z.B. kleiner 1 bar liegen. Wenn der Druck in der Rückführungsleitung bei geöffnetem Hochdruckschaltventil zwischen dem Rückschlagventil und dem Hauptbremszylinder somit um mehr als den Schwellwert kleiner ist, als der Druck in der Rückführungsleitung zwischen dem Rückschlagventil und dem Druckspeicher, öffnet das Rückschlagventil und ermöglicht einen Fluss von Bremsfluid aus dem Druckspeicher in den Hauptbremszylinder. Optional kann der Druckspeicher während des ausschließlichen Bremsens mittels der elektrischen Maschine zumindest bis zu einem minimalen Rückstelldruck befüllt werden, wobei der minimale Rückstelldruck um eine vorbestimmte Differenz kleiner ist als der vorbestimmte Schwellwert zum Öffnen des Rückstellventils. Diese vorbestimmte Differenz kann z.B. im Bereich von 0,1 bar liegen.

Gemäß manchen Ausführungsformen kann vorgesehen sein, dass der Aktuator als elektromechanischer Aktuator ausgebildet und dazu ausgebildet ist, den Hauptbremszylinder bei konstantem Hub der Bremsbetätigungseinrichtung basierend auf einem übergeordneten Steuersignal zum Druckaufbau oder Druckabbau zu betätigen.

Gemäß manchen Ausführungsformen kann vorgesehen sein, dass der Aktuator als pneumatischer Aktuator ausgebildet und dazu ausgebildet ist, bei zunehmendem Hub der Bremsbetätigungseinrichtung zusätzlich zu einer mittels der Bremsbetätigungseinrichtung auf den Hauptbremszylinder aufgebrachten Kraft basierend auf dem erfassten Hub eine Zusatzkraft auf den Hauptbremszylinder zum Druckaufbau aufzubringen.

Im Folgenden wird die Erfindung unter Bezugnahme auf die Figuren der Zeichnungen erläutert. Von den Figuren zeigen:
- Fig. 1: eine schematische Darstellung eines Bremssystems gemäß einem Ausführungsbeispiel der Erfindung;
- Fig. 2: ein Ablaufdiagramm eines Verfahrens gemäß einem Ausführungsbeispiel der Erfindung;
- Fig. 3: ein Diagramm des zeitlichen Verlaufs eines Bremsmoments, eines Restbremsmoments an einer Radbremse des Bremssystems und der Schaltzustände der Ventile des Bremssystems während eines Verfahrens gemäß einem Ausführungsbeispiel der Erfindung;
- Fig. 4: ein Diagramm des zeitlichen Verlaufs eines Bremsmoments, eines Restbremsmoments an einer Radbremse des Bremssystems und der Schaltzustände der Ventile des Bremssystems während eines Verfahrens gemäß einem weiteren Ausführungsbeispiel der Erfindung; und
- Fig. 5: ein Diagramm des zeitlichen Verlaufs eines Bremsmoments, eines Restbremsmoments an einer Radbremse des Bremssystems und der Schaltzustände der Ventile des Bremssystems während eines Verfahrens gemäß einem weiteren Ausführungsbeispiel der Erfindung.

In den Figuren bezeichnen dieselben Bezugszeichen gleiche oder funktionsgleiche Komponenten, soweit nichts Gegenteiliges angegeben ist.

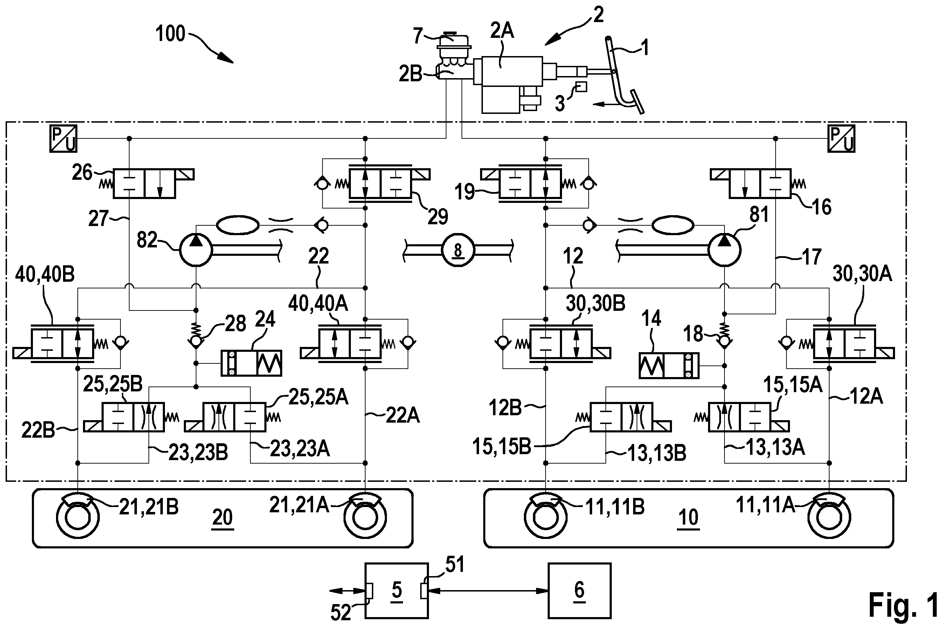

Fig. 1 zeigt schematisch ein Bremssystem 100 für ein Fahrzeug, wie z.B. ein Straßenfahrzeug, wie einen PKW, einen LKW oder einen Bus. Grundsätzlich kann das Bremssystem 100 auch bei einspurigen Fahrzeugen, wie z.B. einem Motorrad zum Einsatz kommen.

Wie in Fig. 1 gezeigt, weist das Bremssystem 100 eine Bremsbetätigungseinrichtung 1, einen Bremskraftverstärker 2 mit einem Aktuator 2A und einem Hauptbremszylinder 2B, einen Sensor 3, eine Steuerungseinrichtung 5 einen ersten Bremskreis 10 mit einer ersten und einer zweiten Radbremse 11A, 11B und einen zweiten Bremskreis 20 mit einer ersten und einer zweiten Radbremse 21A, 21B auf. Die Erfindung ist jedoch nicht auf ein Bremssystem 100 mit zwei Bremskreisen 10, 20 beschränkt, sondern das Bremssystem 100 umfasst zumindest einen Bremskreis 10, 20. Auch können je Bremskreis 10, 20 mehr oder weniger als zwei Radbremsen 11A, 11B, 21A, 21B vorgesehen sein, insbesondere ist zumindest eine Radbremse 11, 21 vorgesehen. Wie in Fig. 1 ferner schematisch dargestellt kann eine elektrische Maschine 6, welche an zumindest ein Rad des Fahrzeugs gekoppelt ist und sowohl als Motor als auch als Generator betreibbar ist, Teil des Bremssystems 100 bilden. Zumindest weist das Bremssystem 100 bzw. die Steuerungseinrichtung 5 eine Schnittstelle 51 zur Kommunikation mit der elektrischen Maschine 6 auf, wie dies in Fig. 1 schematisch dargestellt ist

Die Bremsbetätigungseinrichtung 1 kann, wie in Fig. 1 beispielhaft gezeigt, z.B. als Bremspedal ausgebildet sein, das manuell durch einen Fahrer oder eine Fahrerin betätigbar ist. Infolge einer Betätigung führt die Bremsbetätigungseinrichtung 1 einen Hub aus, welcher mittels des Sensors 3 gemessen bzw. erfasst wird. Der Sensor 3 kann somit als Wegsensor ausgeführt sein.

Der Aktuator 2A des Bremskraftverstärkers 2 kann, wie in Fig. 1 schematisch gezeigt, beispielsweise als elektromechanischer Aktuator mit einem Getriebe (nicht gezeigt) und einem Elektromotor (nicht gezeigt) ausgebildet sein. Der Aktuator 2A ist an dem Hauptbremszylinder 2B gekoppelt und betätigt diesen zur Erhöhung oder Verringerung eines Drucks, indem er einen Kolben (nicht gezeigt) im Innenvolumen des Bremszylinders linear verschiebt. Der Aktuator 2A ist ferner kinematisch an die Bremsbetätigungseinrichtung 1 gekoppelt, wobei der eine Auslenkung bzw. Bewegung der Bremsbetätigungseinrichtung 1 eine vom Hub abhängige Betätigung des Aktuators 2A bewirkt. Insbesondere wird mittels des Sensors 3 der Hub der Bremsbetätigungseinrichtung 1 und basierend auf dem erfassten Hub ein Steuersignal erzeugt, z.B. mittels der Steuerungseinrichtung 5, und an den Aktuator 2A ausgegeben. Der elektromechanische Aktuator 2A kann insbesondere dazu ausgebildet sein, den Hauptbremszylinder 2B bei konstantem Hub der Bremsbetätigungseinrichtung 1 basierend auf einem übergeordneten Steuersignal, das z.B. von der Steuerungseinrichtung 5 erzeugt wird, zum Druckaufbau oder Druckabbau zu betätigen.

Alternativ zu einem elektromechanischen Aktuator kann der Aktuator 2A auch als pneumatischer Aktuator ausgebildet sein. Z.B. kann der Aktuator 2A als Vakuumaktuator ausgeführt sein, welcher dazu ausgebildet ist, bei zunehmendem Hub der Bremsbetätigungseinrichtung 1 zusätzlich zu einer mittels der Bremsbetätigungseinrichtung 1 auf den Hauptbremszylinder 2B aufgebrachten Kraft basierend auf dem erfassten Hub eine Zusatzkraft auf den Hauptbremszylinder 2B zum Druckaufbau aufzubringen. Der Aufbau und die Funktionsweise eines solchen Aktuators in einem Bremskraftverstärker 2 sind dem Fachmann bekannt, weshalb weitere Details hierzu nicht näher erläutert werden.

Die zumindest eine Radbremse 11, 21 des jeweiligen Bremskreises 10, 20 ist über eine Zufuhrleitung 12, 22 mit dem Hauptbremszylinder 2B verbunden. Wie in Fig. 1 schematisch gezeigt ist, können die Radbremsen 10, 20 jeweils eines Bremskreises 10, 20 über eine gemeinsame Zufuhrleitung 12, 22 mit dem Hauptbremszylinder 2B verbunden sein. In der Zufuhrleitung 12, 22 kann, wie in Fig. 1 gezeigt, jeweils ein Trennventil 19, 29 angeordnet sein, über welche die Radbremsen 10, 20 jeweils eines Bremskreises 10, 20 hydraulisch mit dem Hauptbremszylinder 2B verbindbar und von diesem abtrennbar sind. Die Zufuhrleitung 12, 22 verzweigt sich zwischen dem Trennventil 19, 20 und den Radbremsen 11A, 11B, 21A, 21B derart, dass zu jeder Radbremse 11A, 11B, 21A, 21B des jeweiligen Bremskreises 10, 20 ein eigener Zufuhrpfad 12A, 12B, 22A, 22B führt. In dem jeweiligen Zufuhrpfad 12A, 12B, 22A, 22B kann zusätzlich jeweils ein Zufuhrventil 30A, 30B, 40A, 40B angeordnet sein.

Wie in Fig. 1 ferner gezeigt, ist jede Radbremse 11, 21 des jeweiligen Bremskreises10, 20 über eine Abfuhrleitung 13, 23 mit einem Druckspeicher 14, 24 je Bremskreis 10, 20 verbunden. Wie in Fig. 1 gezeigt, kann jede Radbremse 11A, 11B des ersten Bremskreises 10 über eine Leitung 13A, 13B, die sich zu einer gemeinsamen Abfuhrleitung 13 vereinigen mit einem ersten Druckspeicher 14 verbunden sein. Hierbei ist in jeder Leitung 13A, 13B ein Auslassventil 15A, 15B zwischen der jeweiligen Radbremse 11A, 11B und dem Druckspeicher 14 angeordnet, um die jeweilige Radbremse 11A, 11B wahlweise mit dem Druckspeicher 14 zu verbinden oder von diesem zu trennen. In gleicher Weise kann jede Radbremse 21A, 21B des zweiten Bremskreises 20 über eine Leitung 23A, 23B, die sich zu einer gemeinsamen Abfuhrleitung 23 vereinigen mit einem zweiten Druckspeicher 24 verbunden sein. Hierbei ist in jeder Leitung 23A, 23B ein Auslassventil 25A, 25B zwischen der jeweiligen Radbremse 21A, 21B und dem Druckspeicher 24 angeordnet, um die jeweilige Radbremse 21A, 21B wahlweise mit dem Druckspeicher 24 zu verbinden oder von diesem zu trennen.

Wie in Fig. 1 weiterhin gezeigt, kann optional je Bremskreis 10, 20 eine Pumpe 81, 82 vorgesehen sein, die mit einem Sauganschluss mit dem jeweiligen Druckspeicher 14, 24 und einem Druckanschluss mit der jeweiligen Zufuhrleitung 12, 22 verbunden ist. Die Pumpen 81, 82 können durch einen gemeinsamen Motor 8 angetrieben werden. Die Pumpen 81, 82, die Einlassventile 30, 40 und die Auslassventile 15, 25 können derart angesteuert werden, z.B. durch die Steuerungseinrichtung 5, dass diese Funktionen zur radindividuellen Variation des Bremsdrucks, wie z.B. eine ABS-Funktion, ausführen.

Der Druckspeicher 14, 24 des jeweiligen Bremskreises 10, 20 ist ferner über eine jeweilige Rückführungsleitung 17, 27 mit dem Hauptbremszylinder 2B verbunden. Wie in Fig. 1 gezeigt, ist in jeder Rückführungsleitung 17, 27 ein Hochdruckschaltventil 16, 26 angeordnet, welches im geöffneten Zustand einen Fluss von Bremsfluid zwischen dem Druckspeicher 14, 24 und dem Hauptbremszylinder 2B zulässt und in geschlossenem Zustand die Rückführungsleitung 17, 27 verschließt bzw. blockiert.

In der Rückführungsleitung 17, 27 kann zwischen dem Druckspeicher 14, 24 und dem Hochdruckschaltventil 16, 26 außerdem ein Rückschlagventil 18, 28 angeordnet sein, wie in Fig. 1 gezeigt. Das Rückschlagventil 18, 28 ist in eine geschlossene Stellung vorgespannt und dazu ausgebildet ist, zu öffnen, sobald infolge eine Druckdifferenz über das Rückschlagventil 18, 28 einen Schwellwert, z.B. einen Öffnungsschwellwert überschreitet. Zum Öffnen des Rückschlagventils 18, 28 ist erforderlich, dass der Druck zwischen Druckspeicher 14, 24 und Rückschlagventil 18, 28 um mehr als den Öffnungsschwellwert größer als der Druck zwischen Rückschlagventil 18, 28 und Hochdruckschaltventil 16, 26 ist. Der vorbestimmte Öffnungsschwellwert kann z.B. kleiner 1 bar sein.

Die Steuerungseinrichtung 5 kann insbesondere eine elektronische Steuerungseinrichtung sein. Beispielsweise kann die Steuerungseinrichtung 5 einen Prozessor, beispielsweise in Form einer CPU, eines ASIC, eines FPGA oder dergleichen, und einen Datenspeicher, insbesondere einen nicht-flüchtigen Datenspeicher, wie z.B. einen SD-Speicher, einen Flash-Speicher oder ähnliches aufweisen. Der Datenspeicher ist durch den Prozessor auslesbar und kann Software speichern, die durch den Prozessor ausführbar ist und diesen zur Ausführung von Rechenschritten, insbesondere zur Verarbeitung Eingangssignalen und zur Ausgabe von Ausgangssignalen basierend auf den Eingangssignalen veranlasst.

Wie in Fig. 1 schematisch dargestellt, weist die Steuerungseinrichtung 5 eine erste Schnittstelle 51 auf, die zum Senden von Signalen an die elektrische Maschine 6 und/oder zum Empfangen von Signalen von der elektrischen Maschine 6 eingerichtet ist. Die Steuerungseinrichtung 5 ist über die erste Schnittstelle 51 mit der elektrischen Maschine 6 verbunden. Über eine zweite Schnittstelle 52 ist die Steuerungseinrichtung 5 mit der Sensoreinrichtung 3, dem Aktuator 2A, dem Auslassventil 15, 25 und dem Hochdruckschaltventil 16, 26 signalleitend verbunden. Die erste und die zweite Schnittstelle 51, 52 können physikalisch getrennte Schnittstellen sein oder als eine gemeinsame Schnittstelle ausgeführt sein, z.B. als Bus-Schnittstelle. Optional kann die Steuerungseinrichtung 5 zusätzlich mit einem Sensorsystem (nicht gezeigt) verbunden sein, welches externe Bremsbetätigungssignale erzeugt, z.B. mittels Abstandssensoren, die einen Abstand des Fahrzeugs zu anderen Objekten messen.

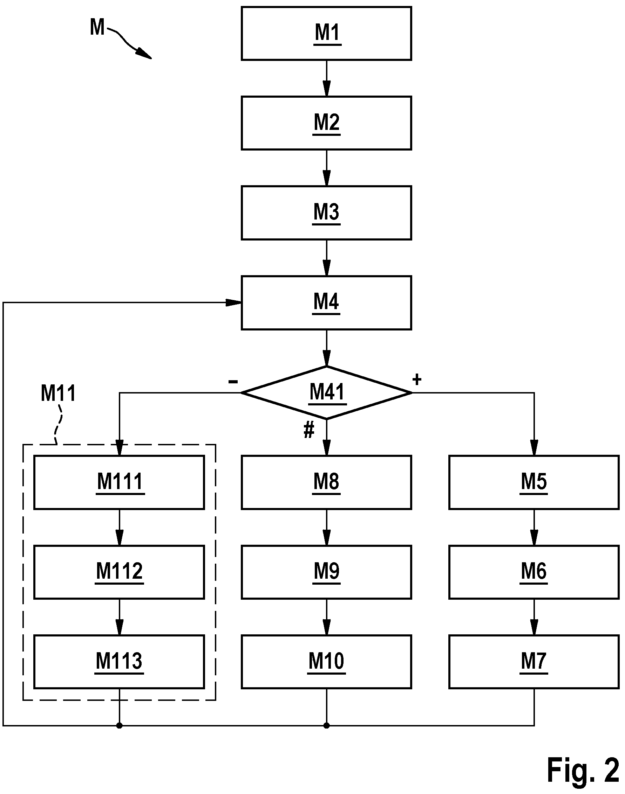

Die Steuerungseinrichtung 5 ist dazu eingerichtet, das Bremssystem 100 zur Ausführung eines Verfahrens M zu veranlassen, das nachfolgend anhand Fig. 2 unter Bezugnahme auf das in Fig. 1 gezeigte Bremssystem 100 erläutert wird.

In Schritt M1 wird mittels des Sensor 3 ein Hub der Bremsbetätigungseinrichtung 1 erfasst. In Schritt M1 kann zusätzlich auch ein externes Bremsbetätigungssignal erfasst werden. Die Steuerungseinrichtung 5 erzeugt in Schritt M2 ein Bremswunschsignal, welches ein Soll-Bremsmoment repräsentiert, basierend auf dem erfassten Hub der Bremsbetätigungseinrichtung 1 oder basierend auf dem externen Bremsbetätigungssignal.

Solange das Soll-Bremsmoment einen bestimmten Schwellwert nicht überschreitet, z.B. kleiner 0,3 G liegt, erfolgt in Schritt M3 ein Erzeugen eines dem Soll-Bremsmoment entsprechenden Bremsmoments basierend auf dem Bremswunschsignal ausschließlich durch Betreiben der elektrischen Maschine 6 als Generator. Dies kann z.B. infolge eines in Schritt M1 erfassten zunehmenden, manuell herbeigeführten Hubs geschehen oder infolge eines erfassten externen Bremsbetätigungssignals. In beiden Fällen kann die Steuerungseinrichtung 5 den Aktuator 2A ansteuern, um den Hauptbremszylinder 2B zu betätigen. Im Fall eines externen Bremsbetätigungssignals führt dies aufgrund der kinematischen Kopplung der Bremsbetätigungseinrichtung 1 an den Aktuator 2A zumindest ab Überschreitung einer bestimmten Betätigungsschwelle auch zu einer Änderung des Hubs der Bremsbetätigungseinrichtung 1. Im Folgenden kann daher ein zunehmender Hub mit einem zunehmendem externen Bremsbetätigungssignal, ein abnehmender Hub mit einem abnehmendem externen Bremsbetätigungssignal und ein konstanter Hub mit einem konstanten externen Bremsbetätigungssignal gleichgesetzt werden.

In Schritt M4 erfolgt ein Ermitteln einer Änderung des Hubs der Bremsbetätigungseinrichtung 1 mithilfe der Steuerungseinrichtung 5. In Schritt M41 wertet die Steuerungseinrichtung 5 aus, ob der Hub zunimmt, wie dies in Fig. 2 durch das Symbol "+" gezeigt ist, ob der Hub abnimmt, wie dies in Fig. 2 durch das Symbol "-" dargestellt ist, oder ob der Hub konstant bleibt, wie dies in Fig. 2 durch das Symbol "#" symbolisiert ist.

In Antwort auf einen zunehmenden Hub der Bremsbetätigungseinrichtung 1 steuert die Steuerungseinrichtung den Aktuator 2A an, welcher den Hauptbremszylinder 2B zum Druckaufbau basierend auf dem Bremswunschsignal betätigt. Die Trennventile 19, 29, Einlassventile 30, 40 werden hierzu geöffnet. In Schritt M6 wird das Hochdruckschaltventil 16, 26 geschlossen oder geschlossen gehalten. Weiterhin wird in Schritt M7 das Auslassventil 15, 25 geöffnet. Somit wird Brems- oder Hydraulikfluid durch die Betätigung des Hauptbremszylinders 2B direkt in den Druckspeicher 14, 24 umgeleitet. Da der Druckspeicher 14, 24 eine Rückstellkraft auf das Bremsfluid ausübt, wird an der Radbremse 11, 21 ein zur Rückstellkraft proportionaler Restbremsdruck erzeugt.

Wenn der Aktuator 2A als elektromechanischer Aktuator ausgeführt ist, wie in Fig. 1 gezeigt, kann dieser bei konstantem Hub der Bremsbetätigungseinrichtung 1 basierend auf einem dem Bremswunschsignal übergeordneten Steuersignal, das von der Steuerungseinrichtung 5 erzeugt wird, den Aktuator 2A veranlassen, den Hauptbremszylinder 2B zum Druckaufbau oder Druckabbau zu betätigen. In Antwort auf einen konstanten Hub der Bremsbetätigungseinrichtung 1 werden im Verfahren M die Schritte M8-M10 ausgeführt. In Schritt M8 veranlasst die Steuerungseinrichtung 5 ein Schalten des Auslassventils 14, 24 in seine geschlossene Stellung. Dadurch wird der Druckspeicher hydraulisch von der Radbremse 11, 21 getrennt. In Schritt M8 wird, mittels der Steuerungseinrichtung 5 das Hochdruckschaltventil 16, 26 geschlossen oder geschlossen gehalten. Ferner erfolgt ein Reduzieren (Schritt M10) des Bremsdrucks in der Radbremse 11, 21 durch Betätigen des Hauptbremszylinders 2B zum Druckabbau mittels des Aktuators 2A basierend auf dem übergeordneten Steuersignal. Somit wird Bremsfluid aus den Radbremsen 11, 21 durch die Zufuhrleitung 12, 22 zurück in den Hauptbremszylinder 2B gefördert und das von der jeweiligen Radbremse 11, 21 erzeugte auf null gesetzt oder zumindest reduziert. In Schritt M10 wird außerdem das Trennventil 19, 29 geöffnet oder offen gehalten.

In Antwort auf einen abnehmenden Hub der Bremsbetätigungseinrichtung 1 erfolgt ein Durchführen eines Druckaufbau-Vermeidungsprozesses an zumindest der Radbremse 11, 21, wie dies durch die Schrittabfolge M11 in Fig. 2 dargestellt ist. Hierbei erfolgt in Schritt M111 ein Schließen des Auslassventils 15, 25 oder, wenn sich das Auslassventil 15, 25 im geschlossenen Zustand befindet, z.B. nach Schritt M10, ein geschlossen Halten des Auslassventils 15, 25. Ferner wird in Schritt M112 das Hochdruckschaltventil 16, 26 geöffnet, so dass eine hydraulische Verbindung zwischen dem Hauptbremszylinder 2B und dem Druckspeicher 14, 24 hergestellt wird, die gegebenenfalls noch durch das Rückschlagventil 18, 28 unterbrochen ist. In Schritt M113 erfolgt ein Rückführen von Bremsfluid aus dem Druckspeicher 14, 24 durch die Rückführungsleitung 17, 27 in den Hauptbremszylinder 2B. Hierzu steuert die Steuerungseinrichtung 5 den Aktuator 2A an, um den Hauptbremszylinder 2B basierend auf dem Bremswunschsignal infolge des abnehmenden Hubs der Bremsbetätigungseinrichtung 1 zu betätigen und den Druck im Hauptbremszylinder 2B zu reduzieren. Sobald die Druckdifferenz zwischen dem Druckspeicher 14, 24 und dem Hauptbremszylinder 2B den

Öffnungsschwellwert des optionalen Rückschlagventils 18, 28 überschreitet, strömt das Bremsfluid aus dem Druckspeicher 14, 24 zurück in den Hauptbremszylinder 2B.

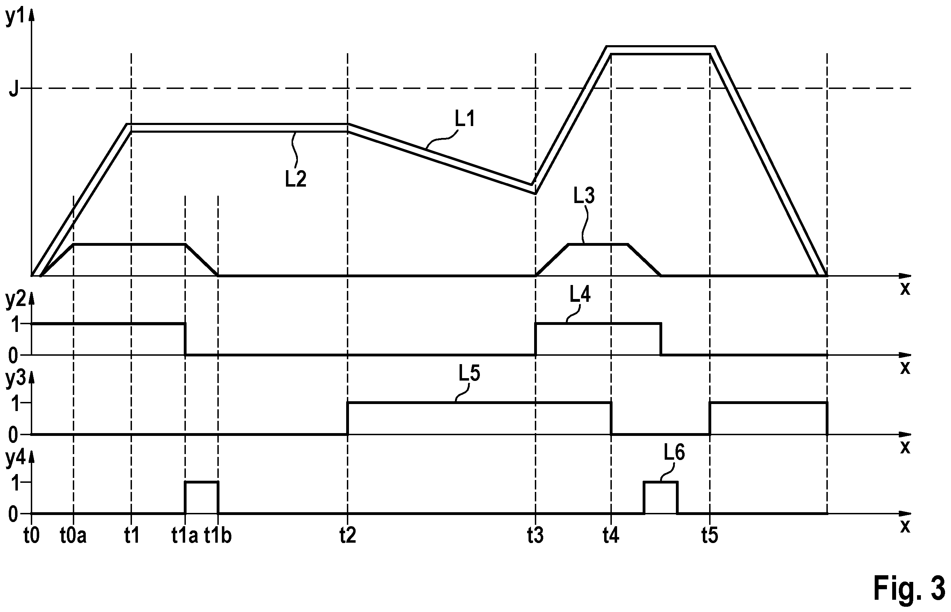

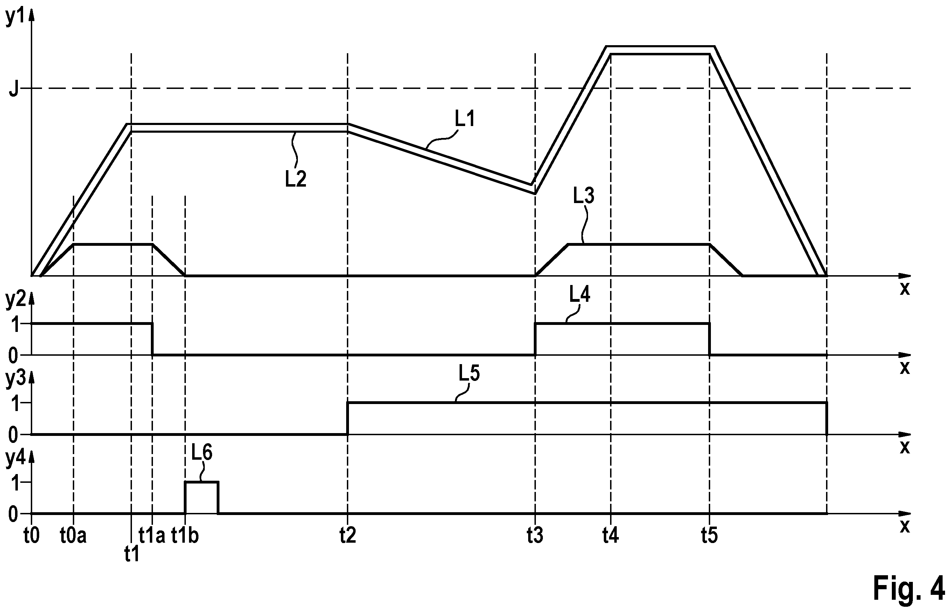

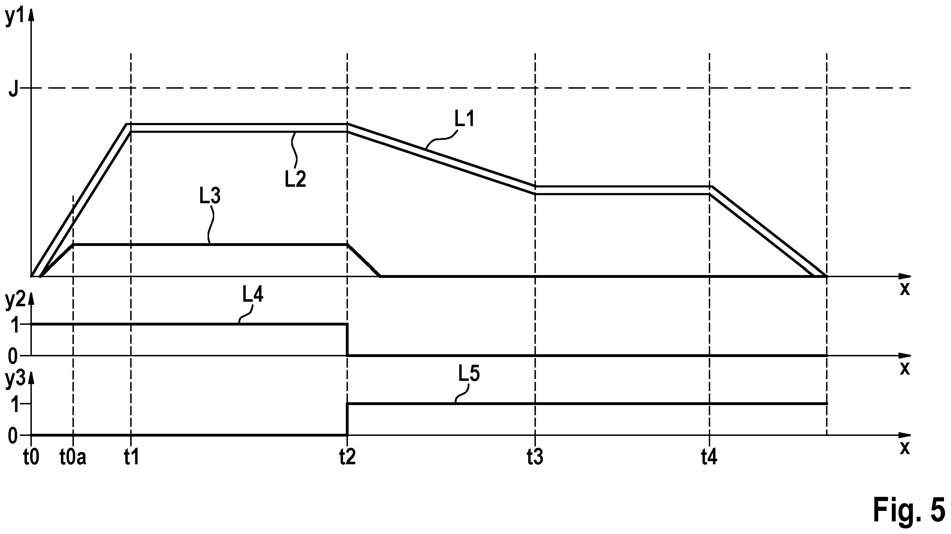

Die Vorteile dieses Verfahrens werden insbesondere aus den Fign. 3 bis 5 deutlich, welche jeweils ein Diagramm zeigen, bei dem auf der horizontalen Achse x die Zeit und auf einer ersten vertikalen Achse y1 ein Bremsmoment aufgetragen ist, wobei die Linie L1 den Verlauf des Soll-Bremsmoments, die Linie L2 den Verlauf des von der elektrischen Maschine 6 erzeugten Bremsmoments und die Linie L3 das von der Radbremse 11, 21 erzeugte Restbremsmoment darstellt. Auf einer zweiten vertikalen Achse y2 ist ein Zustand des Auslassventils 15, 25 zwischen "0" und "1" aufgetragen, wobei "0" für "geschlossen" und "1" für "offen" steht. Der zeitliche Verlauf ist durch die Linie L4 dargestellt. Auf einer dritten vertikalen Achse y3 ist ein Zustand des Hochdruckschaltventils 16, 26 zwischen "0" und "1" aufgetragen, wobei "0" für "geschlossen" und "1" für "offen" steht. Der zeitliche Verlauf ist durch die Linie L5 dargestellt. In den Fign. 4 und 5 ist ferner auf einer vierten vertikalen Achse y4 ein Zustand des Trennventils 19, 29 zwischen "0" und "1" aufgetragen, wobei "0" für "offen" und "1" für "geschlossen" steht.

Fig. 3 zeigt einen Verlauf, bei dem das Bremssystem 100 ausschließlich basierend auf einem externen Bremsbetätigungssignal betrieben wird. Vom Zeitpunkt t0 bis zum Zeitpunkt t1 nimmt das externe Bremsbetätigungssignal zu, was mit einem zunehmendem Hub der Bremsbetätigungseinrichtung 1 gleichzusetzen ist. Entsprechend wird gemäß Block M41 des Verfahrens M aus Fig. 2 die Schrittfolge M5-M7 eingeleitet. Das heißt, bei geöffnetem Trennventil 19, 29 und geschlossenem Hochdruckschaltventil 16, 26 wird zum Zeitpunkt t0 das Auslassventil 15, 25 geöffnet, so dass das Bremsfluid in den Druckspeicher 14, 24 gefördert wird. Ab dem Zeitpunkt t0a stellt sich somit ein konstanter Restbremsdruck ein (Linie L3), der aus der Rückstellkraft des Druckspeichers 14, 24 resultiert. Ab dem Zeitpunkt t1 liegt ein konstantes externes Bremsbetätigungssignal vor, was einem konstanten Hub entspricht. Zum Zeitpunkt t1a werden daher die Schritte M8-M10 des Verfahrens M aus Fig. 2 eingeleitet. Das heißt, zum Zeitpunkt t1a wird das Auslassventil 15, 25 geschlossen (Linie L4), das Hochdruckschaltventil 16, 26 wird geschlossen gehalten und der Hauptbremszylinder 2B mittels des Aktuators 2A zurückgefahren, um Bremsfluid aus der Radbremse 11, 21 abzusaugen. Das Trennventil 19, 29 des einen Radbremskreises 10, 20 kann hierbei kurzzeitig geschlossen werden (Linie L6), z.B. während im anderen Radbremskreis 10, 20 das Trennventil 19, 29 geöffnet ist. Ab dem Zeitpunkt t1b ist das Restbremsmoment auf null reduziert. Ab dem Zeitpunkt t2 nimmt das externe Bremsbetätigungssignal bzw. der Hub bis zum Zeitpunkt t3 ab. Dementsprechend werden ab dem Zeitpunkt t2 die Verfahrensschritte M111-M113 eingeleitet, wobei das Auslassventil 15, 25 (Linie L4) und das Trennventil 19, 29 (Linie L6) geschlossen gehalten und das Hochdruckschaltventil 16, 26 (Linie L5) geöffnet wird. Dadurch kann der niedrige Druck an der Radbremse 11, 21 beibehalten werden (Linie L3). Ab dem Zeitpunkt t3 bis zum Zeitpunkt t4 nimmt das externe Bremsbetätigungssignal wieder zu, was mit einem zunehmendem Hub der Bremsbetätigungseinrichtung 1 gleichzusetzen ist. Entsprechend werden wieder gemäß Block M41 des Verfahrens M aus Fig. 2 die Schrittfolge M5-M7 eingeleitet. Wie in Fig. 3 erkennbar ist, überschreiten das Soll- und das Ist-Bremsmoment (Linien L1, L2) jedoch einen Schwellwert J. Das Soll-Bremsmoment ist proportional zu einem Hub der Bremsbetätigungseinrichtung 1, wie oben erläutert. Ab der Schwelle J kann der elektromechanische Aktuator 2A nicht mehr ohne Rückwirkung auf die Bremsbetätigungseinrichtung 1 bewegt werden. Wie in Fig. 3 erkennbar, kann vorgesehen sein, dass die Schritt M5-M7 und ab dem Zeitpunkt t4, ab dem das externe Bremsbetätigungssignal wieder konstant ist, die Schritte M8-M10, sowie ab dem Zeitpunkt t5, ab dem das externe Bremsbetätigungssignal wieder abnimmt, in derselben Weise ausgeführt werden.

Fig. 4 zeigt einen Verlauf, bei dem das Bremssystem 100 ausschließlich basierend auf einem an der Bremsbetätigungseinrichtung 1 erzeugten Hub betrieben wird. Vom Zeitpunkt t0 bis zum Zeitpunkt t1 nimmt der Hub und damit das Soll-Bremsmoment zu. Entsprechend wird gemäß Block M41 des Verfahrens M aus Fig. 2 die Schrittfolge M5-M7 eingeleitet. Das heißt, bei geöffnetem Trennventil 19, 29 (Linie L6) und geschlossenem Hochdruckschaltventil 16, 26 (Linie L5) wird zum Zeitpunkt t0 das Auslassventil 15, 25 geöffnet, so dass das Bremsfluid in den Druckspeicher 14, 24 gefördert wird. Ab dem Zeitpunkt t0a stellt sich somit ein konstanter Restbremsdruck ein (Linie L3), der aus der Rückstellkraft des Druckspeichers 14, 24 resultiert. Ab dem Zeitpunkt t1 liegt ein konstanter Hub vor. Zum Zeitpunkt t1a werden daher die Schritte M8-M10 des Verfahrens M aus Fig. 2 eingeleitet. Das heißt, zum Zeitpunkt t1a wird das Auslassventil 15, 25 geschlossen (Linie L4), das Hochdruckschaltventil 16, 26 wird geschlossen gehalten und der Hauptbremszylinder 2B mittels des Aktuators 2A zurückgefahren, um Bremsfluid aus der Radbremse 11, 21 abzusaugen. Das Trennventil 19, 29 des einen Radbremskreises 10, 20 kann hierbei kurzzeitig geschlossen werden (Linie L6), z.B. während im anderen Radbremskreis 10, 20 das Trennventil 19, 29 geöffnet ist. Ab dem Zeitpunkt t1b ist das Restbremsmoment auf null reduziert. Ab dem Zeitpunkt t2 nimmt der Hub bis zum Zeitpunkt t3 ab. Dementsprechend werden ab dem Zeitpunkt t2 die Verfahrensschritte M111-M113 eingeleitet, wobei das Auslassventil 15, 25 (Linie L4) und das Trennventil 19, 29 (Linie L6) geschlossen gehalten und das Hochdruckschaltventil 16, 26 (Linie L5) geöffnet wird. Dadurch kann der niedrige Druck an der Radbremse 11, 21 beibehalten werden (Linie L3). Ab dem Zeitpunkt t3 bis zum Zeitpunkt t4 nimmt der Hub der Bremsbetätigungseinrichtung 1 wieder zu. Entsprechend werden wieder gemäß Block M41 des Verfahrens M aus Fig. 2 die Schrittfolge M5-M7 eingeleitet. Wie in Fig. 4 erkennbar ist, überschreiten das Soll- und das Ist-Bremsmoment (Linien L1, L2) jedoch den Schwellwert J, ab welchem der elektromechanische Aktuator 2A nicht mehr ohne Rückwirkung auf die Bremsbetätigungseinrichtung 1 bewegt werden kann. Daher erfolgt im Zeitraum t4 bis t5, in dem der Hub konstant ist, keine Reduzierung des Restbremsmoments (Linie L3) gemäß der Schritte M8-M10. Wenn der Hub ab dem Zeitpunkt t5 wieder abnimmt, erfolgt wieder eine Durchführung der Schritte M111-M113, wie bereits beschrieben.

Fig. 5 zeigt einen Verlauf, bei dem das Bremssystem 100 ausschließlich basierend auf einem an der Bremsbetätigungseinrichtung 1 erzeugten Hub betrieben wird und einen pneumatischen Aktuator als Aktuator 2A aufweist, welcher nicht in der Lage ist, den Hauptbremszylinder 2B unabhängig vom Hub, insbesondere zum Druckabbau bei konstantem Hub zu betreiben. Vom Zeitpunkt t0 bis zum Zeitpunkt t1 nimmt der Hub und damit das Soll-Bremsmoment zu. Entsprechend wird gemäß Block M41 des Verfahrens M aus Fig. 2 die Schrittfolge M5-M7 eingeleitet. Das heißt, bei geöffnetem Trennventil 19, 29 (in Fig. 5 nicht gezeigt) und geschlossenem Hochdruckschaltventil 16, 26 (Linie L5) wird zum Zeitpunkt t0 das Auslassventil 15, 25 geöffnet, so dass das Bremsfluid in den Druckspeicher 14, 24 gefördert wird. Ab dem Zeitpunkt t0a stellt sich somit ein konstanter Restbremsdruck ein (Linie L3), der aus der Rückstellkraft des Druckspeichers 14, 24 resultiert. Ab dem Zeitpunkt t1 liegt ein konstanter Hub vor. Hierbei bleibt das Auslassventil 15, 25 geöffnet, so dass der Restbremsdruck konstant gehalten wird. Ab dem Zeitpunkt t2 nimmt der Hub bis zum Zeitpunkt t3 ab. Dementsprechend werden ab dem Zeitpunkt t2 die Verfahrensschritte M111-M113 eingeleitet, wobei das Auslassventil 15, 25 (Linie L4) geschlossen und das Hochdruckschaltventil 16, 26 (Linie L5) geöffnet wird. Das Trennventil 19, 29 bleibt während der ganzen Zeit offen. Dadurch kann der Druck an der Radbremse 11, 21 (Linie L3) auf null reduziert und gleichzeitig Hydraulikfluid aus dem Druckspeicher 14, 24 in den Hauptbremszylinder 2B zurückgefördert werden. Wenn ab dem Zeitpunkt t3 der Hub bis zum Zeitpunkt t4 konstant bleibt, kann das Auslassventil 15, 25 (Linie L4) und das Hochdruckschaltventil 16, 26 (Linie L5) geschlossen bleiben, um den niedrigen Restbremsdruck beizubehalten.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

## Patentansprüche

1. Verfahren (M) zum Betreiben eines Bremssystems (100) eines Fahrzeugs, umfassend:
Erfassen (M1) eines Hubs einer Bremsbetätigungseinrichtung (1);
Erzeugen (M2) eines Bremswunschsignals, welches ein Soll-Bremsmoment repräsentiert, basierend auf dem erfassten Hub der Bremsbetätigungseinrichtung (1) oder basierend auf einem externen Bremsbetätigungssignal;
Erzeugen (M3) eines dem Soll-Bremsmoment entsprechenden Bremsmoments basierend auf dem Bremswunschsignal ausschließlich durch Betreiben einer elektrischen Maschine als Generator;
Ermitteln (M4) einer Änderung des Hubs der Bremsbetätigungseinrichtung (1); und
in Antwort auf einen abnehmenden Hub der Bremsbetätigungseinrichtung (1), Durchführen (M11) eines Druckaufbau-Vermeidungsprozesses an zumindest einer Radbremse (11, 21) eines Bremskreises (10, 20), welche über eine Zufuhrleitung (12, 22) mit einem basierend auf dem Bremswunschsignal durch einen Aktuator (2A) betätigbaren Hauptbremszylinder (2B) und über eine Abfuhrleitung (13, 23) mit einem Druckspeicher (14, 24) verbunden ist, umfassend:
Schließen (M111) eines in der Abfuhrleitung (13, 23) zwischen der Radbremse (11, 21) und dem Druckspeicher (14, 24) angeordneten Auslassventil (15, 25) oder, wenn sich das Auslassventil (15, 25) im geschlossenen Zustand befindet, geschlossen Halten des Auslassventils (15, 25);
**gekennzeichnet durch** Öffnen (M112) eines Hochdruckschaltventils (16, 26), welches in einer den Druckspeicher (14, 24) mit der hydraulischen Druckerzeugungseinrichtung (2) verbindenden Rückführungsleitung (17, 27) angeordnet ist; und Rückführen (M113) von Hydraulikfluid aus dem Druckspeicher (14, 24) durch die Rückführungsleitung (17, 27) in den Hauptbremszylinder (2B), wobei der Aktuator (2A) den Hauptbremszylinder (2B) basierend auf dem Bremswunschsignal infolge des abnehmenden Hubs der Bremsbetätigungseinrichtung (1) derart betätigt, dass der Druck im Hauptbremszylinder (2B) reduziert wird.

2. Verfahren (M) nach Anspruch 1, wobei der Aktuator (2A) ein elektromechanischer Aktuator ist, welcher dazu ausgebildet ist, den Hauptbremszylinder (2B) bei konstantem Hub der Bremsbetätigungseinrichtung (1) basierend auf einem übergeordneten Steuersignal zum Druckaufbau oder Druckabbau zu betätigen, wobei das Verfahren (M) zusätzlich umfasst:
in Antwort auf einen konstanten Hub der Bremsbetätigungseinrichtung (1):
Schließen (M8) des Auslassventils (14, 24);
Schließen oder geschlossen halten (M9) des Hochdruckschaltventils (16, 26); und
Reduzieren (M10) des Bremsdrucks in der Radbremse (11, 21) durch Betätigen des Hauptbremszylinders (2B) zum Druckabbau mittels des Aktuators (2A) basierend auf dem übergeordneten Steuersignal.

3. Verfahren (M) nach Anspruch 2, wobei der Aktuator (2A) dazu ausgebildet ist, den Hauptbremszylinder (2B) bei konstantem Hub der Bremsbetätigungseinrichtung (1) basierend auf dem externen Bremssignal zum Druckaufbau oder Druckabbau zu betätigen.

4. Verfahren (M) nach einem der voranstehenden Ansprüche, zusätzlich umfassend:
in Antwort auf einen zunehmenden Hub der Bremsbetätigungseinrichtung (1):
Betätigen (M5) des Hauptbremszylinders (2B) zum Druckaufbau mittels des Aktuators (2A) basierend auf dem Bremswunschsignal;
Schließen oder geschlossen halten (M6) des Hochdruckschaltventils (16, 26); und
Öffnen (M7) des Auslassventils (14, 24), um Hydraulikfluid in den Druckspeicher (14, 24) umzuleiten.

5. Verfahren (M) nach einem der voranstehenden Ansprüche, wobei in der Rückführungsleitung (17, 27) zwischen dem Druckspeicher (14, 24) und dem Hochdruckschaltventil (16, 26) ein Rückschlagventil (18, 28) angeordnet ist, welches beim Rückführen (M103) des Hydraulikfluid aus dem Druckspeicher (14, 24) durch die Rückführungsleitung (17, 27) in den Hauptbremszylinder (2B) öffnet, sobald infolge des Druckabbaus im Hauptbremszylinder (2B) eine Druckdifferenz über das Rückschlagventil (18, 28) einen vorbestimmten Schwellwert überschreitet.

6. Verfahren (M) nach Anspruch 5, wobei der vorbestimmte Schwellwert kleiner 1 bar ist.

7. Bremssystem (100) für ein Fahrzeug, aufweisend:
eine Bremsbetätigungseinrichtung (1), welche dazu ausgebildet ist, infolge manueller Betätigung einen Hub auszuführen;
einen Sensor (3) zum Erfassen des Hubs der Bremsbetätigungseinrichtung (1);
einen kinematisch an die Bremsbetätigungseinrichtung (1) gekoppelten Bremskraftverstärker (2) mit einem Aktuator (2A) und einem durch den Aktuator (2A) betätigbaren Hauptbremszylinder (2B);
zumindest einen Bremskreis (10, 20) mit zumindest einer Radbremse (11, 21), welche über eine Zufuhrleitung (12, 22) mit dem Hauptbremszylinder (2B) verbunden ist;
einen Druckspeicher (14, 24), welcher über eine Abfuhrleitung (13, 23) mit der Radbremse (11, 21) und über eine Rückführungsleitung (17, 27) mit dem Hauptbremszylinder (2B) verbunden ist;
ein in der Abfuhrleitung (13, 23) angeordnetes Auslassventil (15, 25);
ein in der Rückführungsleitung (17, 27) angeordnetes Hochdruckschaltventil (16, 26); und
eine Steuerungseinrichtung (5), welche mit der Sensoreinrichtung (3), dem Aktuator (2A), dem Auslassventil (15, 25) und dem Hochdruckschaltventil (16, 26) signalleitend verbunden ist und eine Schnittstelle (51) aufweist, die zum Senden von Signalen an eine elektrische Maschine (6) und/oder zum Empfangen von Signalen von der elektrischen Maschine (6) eingerichtet ist, wobei die elektrische Maschine (6) zum Erzeugen eines Bremsmoments als Generator betreibbar ist, und **dadurch gekennzeichnet, dass** die Steuerungseinrichtung (5) dazu ein-
gerichtet ist, das Bremssystem (100) zur Ausführung eines Verfahrens (M) nach einem der voranstehenden Ansprüche zu veranlassen.

8. Bremssystem (100) nach Anspruch 7, wobei in der Rückführungsleitung (17, 27) zwischen dem Druckspeicher (14, 24) und dem Hochdruckschaltventil (16, 26) ein Rückschlagventil (18, 28) angeordnet ist, welches dazu ausgebildet ist, zu öffnen, sobald infolge eines Druckabbaus im Hauptbremszylinder (2B) bei geöffnetem Hochdruckschaltventil (16, 26) eine Druckdifferenz über das Rückschlagventil (18, 28) einen vorbestimmten Schwellwert überschreitet.

9. Bremssystem (100) nach Anspruch 7, wobei der vorbestimmte Schwellwert kleiner 1 bar ist.

10. Bremssystem (100) nach einem der Ansprüche 7 bis 9, wobei:
der Aktuator (2A) als elektromechanischer Aktuator ausgebildet und dazu ausgebildet ist, den Hauptbremszylinder (2B) bei konstantem Hub der Bremsbetätigungseinrichtung (1) basierend auf einem übergeordneten Steu-ersignal zum Druckaufbau oder Druckabbau zu betätigen; oder
der Aktuator (2A) als pneumatischer Aktuator ausgebildet und dazu ausgebildet ist, bei zunehmendem Hub der Bremsbetätigungseinrichtung (1) zusätzlich zu einer mittels der Bremsbetätigungseinrichtung (1) auf den Hauptbremszylinder (2B) aufgebrachten Kraft basierend auf dem erfassten Hub eine Zusatzkraft auf den Hauptbremszylinder (2B) zum Druckaufbau aufzubringen.

## Claims

1. Method (M) for operating a brake system (100) of a vehicle, comprising:
detecting (M1) a stroke of a brake actuating device (1);
generating (M2) a braking request signal, which represents a target braking torque, on the basis of the detected stroke of the brake actuating device (1) or on the basis of an external brake actuating signal; generating (M3) a braking torque, which corresponds to the target braking torque, on the basis of the braking request signal exclusively by operating an electric machine as a generator;
determining (M4) a change in the stroke of the brake actuating device (1); and
in response to a decreasing stroke of the brake actuating device (1), carrying out (M11) a pressure build-up avoidance process on at least one wheel brake (11, 21) of a brake circuit (10, 20), which wheel brake is connected via a supply line (12, 22) to a master brake cylinder (2B) actuable by an actuator (2A) on the basis of the braking request signal and via a discharge line (13, 23) to a pressure accumulator (14, 24), comprising:
closing (M111) an outlet valve (15, 25) arranged in the discharge line (13, 23) between the wheel brake (11, 21) and the pressure accumulator (14, 24) or, when the outlet valve (15, 25) is in the closed state, holding the outlet valve (15, 25) closed; **characterized by**
opening (M112) a high-pressure switching valve (16, 26), which is arranged in a return line (17, 27) connecting the pressure accumulator (14, 24) to the hydraulic pressure-generating device (2); and
returning (M113) hydraulic fluid from the pressure accumulator (14, 24) through the return line (17, 27) to the master brake cylinder (2B), wherein the actuator (2A) actuates the master brake cylinder (2B) on the basis of the braking request signal as a result of the decreasing stroke of the brake actuating device (1) in such a way that the pressure in the master brake cylinder (2B) is reduced.

2. Method (M) according to Claim 1, wherein the actuator (2A) is an electromechanical actuator, which is designed to actuate the master brake cylinder (2B) with a constant stroke of the brake actuating device (1) on the basis of a superordinate control signal for building up pressure or reducing pressure, wherein the method (M) additionally comprises:
in response to a constant stroke of the brake actuating device (1):
closing (M8) the outlet valve (14, 24);
closing or holding closed (M9) the high-pressure switching valve (16, 26); and
reducing (M10) the brake pressure in the wheel brake (11, 21) by actuating the master brake cylinder (2B) for reducing pressure by means of the actuator (2A) on the basis of the superordinate control signal.

3. Method (M) according to Claim 2, wherein the actuator (2A) is designed to actuate the master brake cylinder (2B) with a constant stroke of the brake actuating device (1) on the basis of the external braking signal for building up pressure or reducing pressure.

4. Method (M) according to any of the preceding claims, additionally comprising:
in response to an increasing stroke of the brake actuating device (1):
actuating (M5) the master brake cylinder (2B) for building up pressure by means of the actuator (2A) on the basis of the braking request signal;
closing or holding closed (M6) the high-pressure switching valve (16, 26); and
opening (M7) the outlet valve (14, 24) in order to divert hydraulic fluid into the pressure accumulator (14, 24).

5. Method (M) according to any of the preceding claims, wherein a check valve (18, 28) is arranged in the return line (17, 27) between the pressure accumulator (14, 24) and the high-pressure switching valve (16, 26), which check valve, when the hydraulic fluid is returned (M103) from the pressure accumulator (14, 24) through the return line (17, 27) to the master brake cylinder (2B), opens as soon as a pressure difference across the check valve (18, 28) exceeds a predetermined threshold value as a result of the reduction in pressure in the master brake cylinder (2B).

6. Method (M) according to Claim 5, wherein the predetermined threshold value is less than 1 bar.

7. Brake system (100) for a vehicle, having:
a brake actuating device (1), which is designed to execute a stroke as a result of manual actuation;
a sensor (3) for detecting the stroke of the brake actuating device (1);
a brake booster (2) kinematically coupled to the brake actuating device (1) and having an actuator (2A) and a master brake cylinder (2B) actuable by the actuator (2A);
at least one brake circuit (10, 20) having at least one wheel brake (11, 21),
which is connected to the master brake cylinder (2B) via a supply line (12, 22);
a pressure accumulator (14, 24), which is connected via a discharge line (13, 23) to the wheel brake (11, 21) and via a return line (17, 27) to the master brake cylinder (2B);
an outlet valve (15, 25) arranged in the discharge line (13, 23);
a high-pressure switching valve (16, 26) arranged in the return line (17, 27); and
a control device (5), which is connected in signal-conducting manner to the sensor device (3), the actuator (2A), the outlet valve (15, 25) and the high-pressure switching valve (16, 26) and has an interface (51) which is configured to transmit signals to an electric machine (6) and/or to receive signals from the electric machine (6), wherein the electric machine (6) can be operated as a generator for generating a braking torque, and **characterized in that** the control device (5) is configured to cause the brake system (100) to carry out a method (M) according to any of the preceding claims.

8. Brake system (100) according to Claim 7, wherein a check valve (18, 28) is arranged in the return line (17, 27) between the pressure accumulator (14, 24) and the high-pressure switching valve (16, 26), which check valve is designed to open as soon as a pressure difference across the check valve (18, 28) exceeds a predetermined threshold value as a result of a reduction in pressure in the master brake cylinder (2B) when the high-pressure switching valve (16, 26) is open.

9. Brake system (100) according to Claim 7, wherein the predetermined threshold value is less than 1 bar.

10. Brake system (100) according to any of Claims 7 to 9, wherein:
the actuator (2A) is designed as an electromechanical actuator and is designed to actuate the master brake cylinder (2B) with a constant stroke of the brake actuating device (1) on the basis of a superordinate control signal for building up pressure or reducing pressure; or
the actuator (2A) is designed as a pneumatic actuator and is designed to apply, in addition to a force applied to the master brake cylinder (2B) by means of the brake actuating device (1) on the basis of the detected stroke, an additional force to the master brake cylinder (2B) for building up pressure as the stroke of the brake actuating device (1) increases.

## Revendications

1. Procédé (M) destiné à faire fonctionner un système de freinage (100) d'un véhicule, comprenant :
détection (M1) d'une course d'un dispositif d'actionnement de frein (1) ;
génération (M2) d'un signal de demande de freinage, qui représente un couple de freinage théorique, sur la base de la course détectée du dispositif d'actionnement de frein (1) ou sur la base d'un signal d'actionnement de frein externe ; génération (M3) d'un couple de freinage correspondant au couple de freinage théorique sur la base du signal de demande de freinage uniquement en faisant fonctionner une machine électrique en tant que générateur ;
détermination (M4) d'une modification de la course du dispositif d'actionnement de frein (1) ; et
en réponse à une course décroissante du dispositif d'actionnement de frein (1), mise en œuvre (M11) d'un processus d'évitement d'augmentation de pression sur au moins un frein de roue (11, 21) d'un circuit de freinage (10, 20), qui est relié par une conduite d'alimentation (12, 22) à un maître-cylindre de frein (2B) pouvant être actionné sur la base du signal de demande de freinage par un actionneur (2A) et est relié par une conduite de sortie (13, 23) à un accumulateur de pression (14, 24), comprenant :
fermeture (M111) d'une soupape d'évacuation (15, 25) disposée dans la conduite de sortie (13, 23) entre le frein de roue (11, 21) et l'accumulateur de pression (14, 24) ou, lorsque la soupape d'évacuation (15, 25) se trouve dans l'état fermé, maintien de la soupape d'évacuation (15, 25) dans l'état fermé ;
**caractérisé par**
ouverture (M112) d'une soupape de commutation haute pression (16, 26), qui est disposée dans une conduite de retour (17, 27) reliant l'accumulateur de pression (14, 24) au dispositif de génération de pression hydraulique (2) ; et
retour (M113) du liquide hydraulique provenant de l'accumulateur de pression (14, 24) par la conduite de retour (17, 27) dans le maître-cylindre de frein (2B), l'actionneur (2A) actionnant le maître-cylindre de frein (2B) sur la base du signal de demande de freinage suite à la course décroissante du dispositif d'actionnement de frein (1) de manière à réduire la pression dans le maître-cylindre de frein (2B).

2. Procédé (M) selon la revendication 1, l'actionneur (2A) étant un actionneur électromécanique, qui est formé pour actionner le maître-cylindre de frein (2B) à une course constante du dispositif d'actionnement de frein (1) sur la base d'un signal de commande de niveau supérieur pour l'augmentation de pression ou la réduction de pression, le procédé (M) comprenant en supplément :
en réponse à une course constante du dispositif d'actionnement de frein (1) :
fermeture (M8) de la soupape d'évacuation (14, 24) ;
Fermeture ou maintien (M9) de la soupape de commutation haute pression (16, 26) dans l'état fermé ; et
réduction (M10) de la pression de freinage dans le frein de roue (11, 21) en actionnant le maître-cylindre de frein (2B) pour réduire la pression au moyen de l'actionneur (2A) sur la base du signal de commande de niveau supérieur.

3. Procédé (M) selon la revendication 2, l'actionneur (2A) étant formé pour actionner le maître-cylindre de frein (2B) à une course constante du dispositif d'actionnement de frein (1) sur la base du signal de frein externe pour l'augmentation de pression ou la réduction de pression.

4. Procédé (M) selon l'une des revendications précédentes, comprenant en supplément :
en réponse à une course croissante du dispositif d'actionnement de frein (1) :
actionnement (M5) du maître-cylindre de frein (2B) pour augmenter la pression au moyen de l'actionneur (2A) sur la base du signal de demande de freinage ;
fermeture ou maintien (M6) de la soupape de commutation haute pression (16, 26) dans l'état fermé ; et
ouverture (M7) de la soupape d'évacuation (14, 24) pour dévier du liquide hydraulique dans l'accumulateur de pression (14, 24).

5. Procédé (M) selon l'une des revendications précédentes, une soupape anti-retour (18, 28), qui s'ouvre pendant le retour (M103) du fluide hydraulique provenant de l'accumulateur de pression (14, 24) par la conduite de retour (17, 27) dans le maître-cylindre de frein (2B), étant disposée dans la conduite de retour (17, 27) entre l'accumulateur de pression (14, 24) et la soupape de commutation haute pression (16, 26) dès qu'une différence de pression par la soupape anti-retour (18, 28) dépasse une valeur de seuil prédéfinie en raison de la réduction de pression dans le maître-cylindre de frein (2B).

6. Procédé (M) selon la revendication 5, la valeur de seuil prédéfinie étant inférieure à 1 bar.

7. Système de freinage (100) pour un véhicule, comportant :
un dispositif d'actionnement de frein (1), qui est formé exécuter une course suite à un actionnement manuel ;
un capteur (3) destiné à détecter la course du dispositif d'actionnement de frein (1) ;
un amplificateur de force de freinage (2) couplé cinématiquement au dispositif d'actionnement de frein (1) avec un actionneur (2A) et un maître-cylindre de frein (2B) pouvant être actionné par l'actionneur (2A) ;
au moins un circuit de freinage (10, 20) avec au moins un frein de roue (11, 21), qui est relié au maître-cylindre de frein (2B) par une conduite d'alimentation (12, 22),
un accumulateur de pression (14, 24), qui est relié au frein de roue (11, 21) par une conduite de sortie (13, 23) et au maître-cylindre de frein (2B) par une conduite de retour (17, 27) ;
une soupape d'évacuation (15, 25) disposée sur la conduite de sortie (13, 23) ;
une soupape de commutation haute pression (16, 26) disposée dans la conduite de retour (17, 27) ; et
un dispositif de commande (5), qui est relié au dispositif de détection (3), à l'actionneur (2A), à la soupape d'évacuation (15, 25) et à la soupape de commutation haute pression (16, 26) et comporte une interface (51), qui est mise au point pour envoyer des signaux à une machine électrique (6) et/ou pour recevoir des signaux de la machine électrique (6), la machine électrique (6) pouvant fonctionner comme un générateur pour générer un couple de freinage, et **caractérisé en ce que** le dispositif de commande (5) est mis au point pour amener le système de freinage (100) à exécuter un procédé (M) selon l'une des revendications précédentes.

8. Système de freinage (100) selon la revendication 7, une soupape anti-retour (18, 28) qui est formée pour s'ouvrir dès qu'une différence de pression par la soupape anti-retour (18, 28) dépasse une valeur de seuil prédéfinie suite à une réduction de pression dans le maître-cylindre de frein (2B) lorsque la soupape de commutation haute pression (16, 26) est ouverte, étant disposée dans la conduite de retour (17, 27) entre l'accumulateur de pression (14, 24) et la soupape de commutation haute pression (16, 26).

9. Système de freinage (100) selon la revendication 7, la valeur de seuil prédéfinie étant inférieure à 1 bar.

10. Système de freinage (100) selon l'une des revendications 7 à 9 :
l'actionneur (2A) étant formé comme un actionneur électromécanique et étant formé pour actionner le maître-cylindre de frein (2B) à une course constante du dispositif d'actionnement de frein (1) sur la base d'un signal de commande de niveau supérieur pour l'augmentation de pression ou la réduction de pression ; ou
l'actionneur (2A) étant formé comme un actionneur pneumatique et étant formé pour appliquer une force supplémentaire sur le maître-cylindre de frein (2B) pour augmenter la pression en plus d'une force appliquée sur le maître-cylindre de frein (2B) au moyen du dispositif d'actionnement de frein (1) sur la base de la course détectée lorsque la course du dispositif d'actionnement de frein (1) augmente.
